(19) Europäisches Patentamt
European Patent Office
Office européen des brevets

(11) EP 1 557 455 A1

(12) **EUROPÄISCHE PATENTANMELDUNG**

(43) Veröffentlichungstag:
**27.07.2005 Patentblatt 2005/30**

(51) Int Cl.[7]: **C09J 175/04**, C09J 163/00, C08G 18/10

(21) Anmeldenummer: **04001406.0**

(22) Anmeldetag: **23.01.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Sika Technology AG**
**6340 Baar (CH)**

(72) Erfinder: **Tobler, David**
**8400 Winterthur (CH)**

(54) **Thixotrope reaktive Zusammensetzung**

(57) Die vorliegende Erfindung betrifft reaktive Zusammensetzungen, welche mindestens eine Verbindung **A** mit mindestens zwei reaktiven Gruppen, welche ausgewählt sind aus der Gruppe umfassend Isocyanat, Epoxid, Alkoxysilan und deren Mischungen sowie mindestens ein polymeres Thixotropiermittel **B,** welches hergestellt wird durch eine Homopolymerisation eines (Meth)acrylates **B1** oder durch eine Copolymerisation eines (Meth)acrylates **B1** mit mindestens einem weiteren (Meth)acrylat, wobei die (Meth)acrylat-Mischung eine mittlere (Meth)acrylatfunktionalität $\bar{f}$ von 2.5 bis 4.5 besitzt. Das (Meth)acrylat **B1** weist hierbei drei oder mehr Meth)acrylatgruppen auf.

Weiterhin offenbart die Erfindung die Verwendung der Verbindung **B** als Thixotropiermittel.

EP 1 557 455 A1

## Beschreibung

### Technisches Gebiet

Die vorliegende Erfindung betrifft das Gebiet der Thixotropierung von reaktiven Zusammensetzungen insbesondere von Kleb und -Dichtstoffen.

### Stand der Technik

Für die Applikation eines Kleb- oder Dichtstoffes ist die Thixotropie ein wichtiges Merkmal. Kleb- und Dichtstoffe werden üblicherweise in Kartuschen Hobbocks oder Fässern gelagert. Bei der Applikation werden sie durch Pumpen, oder durch Auspressen mittels Kartuschenpistole oder Folgeplatten aus diesem Lagergefäss entnommen und werden typischerweise mittels einer Düse, gegebenenfalls durch einen Statikmischer, auf das zu verklebende oder abzudichtende Substrat appliziert. Um möglichst einer gute Förderung und kleinen Kraftaufwand zu ermöglichen ist es vorteilhaft, wenn der Kleb- oder Dichtstoff eine möglichst geringe Viskosität aufweist. Andererseits sollte der applizierte Kleb- oder Dichtstoff nach der Applikation in der applizierten Gestalt verbleiben und nicht wegfliessen. Dies ist insbesondere bei dicken Schichten oder bei Vertikal- oder Über-Kopf-Applikationen von enormer Wichtigkeit. Um eine möglichst hohe Gestaltbeibehaltung zu ermöglichen ist eine möglichst hohe Viskosität von Vorteil.

Diese Anforderung von Förderung und Gestaltbewahrung sind völlig gegenläufig. Dem Fachmann ist jedoch das Phänomen der Thixotropie bekannt. Bei diesem Effekt wird ein Material, sobald es bewegt wird dünner und erstarrt wieder nachdem die Bewegung wieder aufhört. Dieser Effekt wird deshalb vom Grossteil der kommerziellen Kleb- und Dichtstoffe genutzt. Es wird hierbei üblicherweise dem Klebstoff, beziehungsweise dem mittelviskosen Bindemittel, ein Zusatz beigegeben. Solche Thixotropiermittel sind beispielsweise anorganische Substanzen wie beispielsweise Bentonite oder pyrogene Kieselsäuren oder organische Substanzen wie Ricinusöl-Derivate, spezielle Polyamide oder Polyharnstoffe.

So beschreibt beispielsweise DE 23 60 019 ein Polyharnstoff-Thixotropiermittel, welches aus der Umsetzung von primären und/oder sekundären Polyaminen, monofunktionellen Alkoholen und/oder Aminen mit Diisocyanatverbindungen resultiert.

Ein Thixotropiermittel für Polyurethanzusammensetzungen auf Basis eines Harnstoffderivates in einem nichtdiffundierenden Trägermaterial ist beispielsweise in EP 1 152 019 A1 beschrieben.

(Meth)acrylate mit einer Funktionalität von grösser als zwei werden hauptsächlich für schnellvernetzende und äusserst resistente Lacke, verwendet. US 3,663,467 beschreibt ein poröses Polymer basierend auf Trimethylolpropantrimethacrylat, welches zur Absorption von Phenol aus Hexan verwendet wird. EP 0 732 348 A1 beschreibt eine feuchtigkeitshärtende Polymerzusammensetzung mit feinen Partikeln eines Copolymer eines Mono(meth)acrylates mit einem Monomer mit zwei oder mehr (Meth)acryloyloxy Gruppen, wobei der Anteil des letzten nicht mehr als 10 Mol-% des Copolymers beträgt und zu einer erhöhten Dehnung und Schlagzähigkeit führen soll.

### Darstellung der Erfindung

Es war die Aufgabe, eine neue Thixotropierung von reaktiven Zusammensetzungen zu finden. Überraschenderweise wurde gefunden, dass dies durch eine thixotrope Zusammensetzung gemäss Anspruch erreicht werden kann. Insbesondere zeigte sich, dass die Verbindung B als Thixotropiermittel für einen breiten Einsatz in reaktiven Zusammensetzungen geeignet ist.

### Wege zur Ausführung der Erfindung

Die vorliegende Erfindung betrifft eine thixotrope Zusammensetzung, welche mindestens eine Verbindung **A** mit mindestens zwei reaktiven Gruppen, welche ausgewählt sind aus der Gruppe umfassend Isocyanat, Epoxid, Alkoxysilan und deren Mischungen, sowie mindestens ein polymeres Thixotropiermittel **B**, umfasst, welches durch eine Homopolymerisation eines (Meth)acrylates **B1** oder durch eine Copolymerisation eines (Meth)acrylates **B1** mit mindestens einem weiteren (Meth)acrylat hergestellt wird. Die (Meth)acrylat-Mischung besitzt hierbei eine mittlere (Meth) acrylatfunktionalität $\overline{f}$ von 2.5 bis 4.5.

Unter "(Meth)acrylat" wird im gesamten vorliegenden Dokument ein Ester der Acrylsäure oder Methacrylsäure verstanden und umfasst deshalb sowohl Methacrylate als auch Acrylate.

Unter "Alkoxysilan" wird im gesamten vorliegenden Dokument eine Organosilizium-Verbindung verstanden, bei welchem mindestens ein organischer Rest über eine C-Si-Bindung an das Siliziumatom und die mindestens einen weiteren organischer Rest besitzt, welcher über eine O-Si-Bindung an das Siliziumatom Rest gebunden ist.

Unter "Epoxy" wird im gesamten vorliegenden Dokument die eine Oxirangruppe, Formel (I), verstanden von

welcher die Glycidylgruppe, Formel (II), die bevorzugte Variante darstellt.

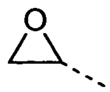 (I) 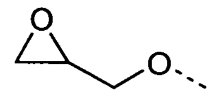 (II)

Unter "Poly" in "Polyol", "Polyamin", "Polymercaptan" und "Polyisocyanat" werden im vorliegenden Dokument Moleküle verstanden, die formal zwei oder mehr der jeweiligen funktionellen Gruppen enthalten.

Der Begriff "Polyurethan" umfasst im vorliegenden Dokument sämtliche Polymere, welche nach dem Diisocyanat-Polyadditions-Verfahren hergestellt werden. Dies schliesst auch solche Polymere ein, die nahezu oder gänzlich frei sind von Urethangruppen, wie Polyether-Polyurethane, Polyester-Polyurethane, Polyether-Polyharnstoffe, Polyharnstoffe, Polyester-Polyharnstoffe, Polyisocyanurate, Polycarbodiimide, usw.

Unter "(Meth)acrylat-Funktionalität", werden die Anzahl (Meth)acrylatgruppen pro Molekül verstanden und dementsprechend wird von "monofunktionellen", "difunktionellen", "trifunktionellen", "tetrafunktionellen" und "pentafunktionellen" (Meth)acrylaten gesprochen.

Die "mittlere (Meth)acrylatfunktionalität $\bar{f}$ " wird nach der folgenden Formel berechnet wird:

$$\bar{f} = \frac{\sum_i n_i f_i}{\sum_i n_i}$$

In dieser Formel steht $n_i$ für die Anzahl Mol des jeweiligen (Meth)acrylates in der (Meth)acrylatmischung und $f_i$ für dessen (Meth)acrylat-Funktionalität. Zur Verhinderung von Unklarheiten wird noch erwähnt, dass für die Bestimmung von $\bar{f}$ lediglich Substanzen berücksichtigt werden, die zumindest eine (Meth)acrylat-Funktion aufweisen, d.h. jegliche andere Substanzen, die in dieser Mischung während der Copolymerisation vorhanden sein können, wie beispielsweise Lösungsmittel, Weichmacher, Verbindung **A** oder die Edukte von **A**, werden hierbei nicht berücksichtigt.

Die erfindungsgemässe Zusammensetzung umfasst mindestens eine Verbindung **A**. Diese Verbindung **A** besitzt mindestens zwei reaktive Gruppen. Diese reaktiven Gruppen sind Isocyanat-, Epoxid- oder Alkoxysilangruppen. Die Verbindung **A** kann auch Mischungen dieser Gruppen aufweisen. Beispielsweise kann also die Verbindung **A** gleichzeitig Alkoxysilan- und Isocyanatgruppen oder gleichzeitig Alkoxysilan- und Epoxygruppen oder Epoxy- und Isocyanatgruppen aufweisen. Es ist sogar möglich, dass die Verbindung **A** gleichzeitig Alkoxysilan-, Epoxy - und Isocyanatgruppen aufweist. Es ist allerdings bevorzugt, dass die Verbindung mindestens zwei gleiche Gruppen aufweist.

Die Verbindung **A** ist insbesondere ein Polymer oder Oligomer.

In einer Ausführungsform ist die Verbindung **A** eine Verbindung **A3**, welche ein mindestens zwei Isocyanatgruppen aufweisendes Polyurethanprepolymer ist. Dieses Polyurethanprepolymer ist herstellbar aus mindestens einem Polyol und mindestens einem Polyisocyanat.

Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Der Überschuss an Polyisocyanat wird so gewählt, dass im resultierenden Polyurethanprepolymer **A3** nach der Umsetzung aller Hydroxylgruppen des Polyols ein Gehalt an freien Isocyanatgruppen von 0.1 bis 15 Gewichts-%, bevorzugt 0.5 bis 5 Gewichts-%, bezogen auf das gesamte Polyurethanprepolymer **A3**, verbleibt. Gegebenenfalls kann das Polyurethanprepolymer **A3** unter Mitverwendung von Weichmachern hergestellt werden, wobei die verwendeten Weichmacher keine gegenüber Isocyanaten reaktive Gruppen enthalten.

Als Polyole für die Herstellung des Polyurethanprepolymers **A3** können beispielsweise die folgenden handelsüblichen Polyole oder beliebige Mischungen davon eingesetzt werden:

- Polyoxyalkylenpolyole, auch Polyetherpolyole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole,

Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxypropylendiole und -triole mit einem Molekulargewicht von 400 bis 8'000 g/mol. Unter "Molekulargewicht" oder "Molgewicht" versteht man im vorliegenden Dokument stets das Molekulargewichtsmittel $M_n$.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

- Hydroxyfunktionelle Polybutadiene.
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind,
- Polyacrylat- und Polymethacrylatpolyole.

Diese genannten Polyole weisen ein mittleres Molekulargewicht von 250 bis 30'000 g/mol und eine mittlere OH-Funktionalität im Bereich von 1.6 bis 3 auf.

Zusätzlich zu diesen genannten Polyolen können niedrigmolekulare zwei- oder mehrwertige Alkohole wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole und andere höherwertige Alkohole, niedrigmolekulare Alkoxylierungsprodukte der vorgenannten zwei- und mehrwertigen Alkohole sowie Mischungen der vorgenannten Alkohole bei der Herstellung des Polyurethanprepolymers **A3** mitverwendet werden.

Für die Herstellung des Polyurethanprepolymers **A3** werden handelsübliche Polyisocyanate verwendet. Als Beispiele seien die folgenden, in der Polyurethanchemie bestens bekannten Polyisocyanate erwähnt:

2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), m- und p-Xylylendiisocyanat (XDI), 1,3-und 1,4-Tetramethylxylylendiisocyanat (TMXDI), 1,3- und 1,4-Bis-(isocyanatomethyl)-cyclohexan, sowie Oligomere und Polymere der vorgenannten Isocyanate, sowie beliebige Mischungen der vorgenannten Isocyanate. Besonders bevorzugt sind Diisocyanate, insbesondere MDI, TDI, HDI und IPDI.

In einer weiteren Ausführungsform ist die Verbindung **A** eine Verbindung **A1**, welche ein Diglydicylether von Bisphenol-A, Bisphenol-F, Bisphenol-A/F, eine Mischung oder eine Oligomer davon ist. Die Bezeichnung 'A/F' verweist hierbei auf eine Mischung von Aceton mit Formaldehyd, welche als Edukt bei dessen Herstellung verwendet wird. Bei den Diglycidylethern handelt es sich vorzugsweise um ein Flüssigharz. Durch die Herstellungsverfahren dieser Harze bedingt, ist klar, dass in den Flüssigharzen auch höher molekulare Bestandteile enthalten sind. Solche Flüssigharze sind beispielsweise als Araldite® GY 250, Araldite® PY 304, Araldite® GY 282 (früher Vantico, jetzt Huntsman) oder D.E.R.® 331 (Dow) erhältlich.

Weiterhin können weitere Glycidylether in der Zusammensetzung vorhanden sein, die dem Fachmann als Harze oder Reaktivverdünner bekannt sind. Als Reaktivverdünner sind insbesondere Glycidylether von Alkyl-, Alkylenresten und Phenolen, wie beispielsweise Hexandioldiglycidylether, Polypropylenglykoldiglycidylether, Trimethylolpropantriglycidylether, Phenylglycidylether oder Kresolglycidylether, geeignet.

In einer weiteren Ausführungsform ist die Verbindung **A** eine Verbindung **A2,** welche ein Polymer mit mindestens zwei Alkoxysilangruppen darstellt. Einerseits stellt die Verbindung **A2** eine Verbindung **A2-1** und andererseits eine Verbindung **A2-2** dar.

Die Verbindung **A2-1** ist ein Polyurethanprepolymer, welches mindestens zwei Alkoxysilangruppen aufweist. **A2-2** lässt sich aus einem Isocyanatgruppen aufweisenden Prepolymer, entsprechend der Art und Herstellung von **A3**, und mindestens einer Verbindung, welche mindestens eine Alkoxygruppe und deren organische Rest, eine NCO-reaktive Gruppe, insbesondere ein Mercapto-Alkoxysilan oder ein Amino-Alkoxysilan. Besonders sind sie ausgewählt aus der Gruppe umfassend 3-Aminopropyl-trimethoxysilan, 3-Aminopropyl-dimethoxymethylsilan, Aminomethyl-trimethoxysilan, Aminomethyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-(2-Aminoethyl)-3-aminopropyl-trimethoxysilan, N-(2-Aminoethyl)-3-aminopropyldimethoxymethylsilan, 7-Amino-4-oxaeptyldimethoxymethylsilan, 3-Mercaptopropyltrimethoxysilan, 3-Mercaptopropylmethyldimethoxysilan, 3-Mercaptopropyldimethylmethoxysilan, sowie deren Analoge mit Ethoxy- oder Isopropoxy- anstelle der Methoxygruppen. In einer Ausführungsform ist das Aminoalkoxysilan ein Addukt eines der soeben genannten Aminoalkoxysilane mit einem Maleinsäure- oder Fumarsäureester, wie es beispielsweise in US 5,364,955 beschrieben ist.

Die Verbindung **A2-2** ist ein mindestens zwei Alkoxysilangruppen aufweisender Polyether und sind dem Fachmann unter dem Begriff der MS-Polymere bestens bekannt und sind beispielsweise in US 6,207,766 in Spalte 4 Zeilen 27 bis 54 und in US 3,971,751 beschrieben.

Die Verbindungen A2-2 lassen durch eine Hydrosilylierungsreaktion aus mindestens zwei C=C Doppelbindungen aufweisenden Polyether, insbesondere aus allylterminierten Polyoxyalkylenpolymeren, und einer Verbindung $HSi(R^1)_a(OR^2)_{3-a}$ herstellen. $R^1$ und $R^2$ stellen hierbei unabhängig von einander einen $C_1$-$C_8$-Alkylrest, insbesondere Methyl oder Ethyl, und a den Wert 0 oder 1, insbesondere den Wert 0, dar. Für die Hydrosilylierungsreaktion wird ein Katalysator eingesetzt, der üblicherweise ein Platinkatalysator. Die Verbindungen **A2-2** weist unter anderem den Vorteil auf, dass sie ohne den Einsatz von Isocyanaten hergestellt werden können und andererseits, dass diese Verbindungen besonderes niedriger Viskosität aufweisen, so dass sich sehr gut für die Verwendung in einkomponentigen feuchtigkeitshärtenden Zusammensetzungen eignen.

Für die Verbindung **A2** ist bevorzugt, wenn die Alkoxysilan-Gruppen Trimethoxy-, oder Triethoxygruppen, insbesondere Trimethoxygruppen, sind.

Die Verbindung **A** kann auch erhalten werden durch eine Reaktion eines mindestens zwei Isocyanat-Gruppen aufweisenden Polyurethanprepolymeren **A3** mit mindestens einer Verbindung **AX.** Die Verbindung **AX** weist hierbei eine NCO-reaktive Gruppe, insbesondere primäre oder sekundäre Amino-, oder SH- oder OH- Gruppe, sowie eine oder mehrere Epoxid- oder Alkoxysilangruppen auf. Die hierfür geeigneten Polyurethanprepolymeren **A3** sowie deren Herstellung wurden bereits vorher in dieser Schrift beschrieben. Als Verbindung **AX** können beispielsweise Aminosilane, Mercaptosilane oder Hydroxy-Epoxide verwendet werden. In einer besonders bevorzugten Ausführungsform ist die Verbindung **AX** ein Michael-Addukt von Aminoalkylsilanen und Malein- oder Fumarsäurediestern, wie sie beispielsweise in EP 0 403 921 beschrieben sind.

Als Aminosilane sind besonders die Aminosilane geeignet, welche ausgewählt sind aus der Gruppe umfassend 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-(2-Aminoethyl)-3-aminopropyl-trimethoxysilan, N-(2-Aminoethyl)-3-aminopropyl-dimethoxymethylsilan, 7-Amino-4-oxaeptyldimethoxymethylsilan, sowie deren Analoge mit Ethoxy- oder Isopropoxy- anstelle der Methoxygruppen. Bevorzugt sind 3-Aminopropyl-trimethoxysilan und 3-Aminopropyl-triethoxysilan.

Als Mercaptosilane sind besonders die Mercaptosilane geeignet, welche ausgewählt sind aus der Gruppe umfassend 3-Mercaptopropyltrimethoxysilan, 3-Mercaptopropylmethyldimethoxysilan, 3-Mercaptopropyldimethylmethoxysilan, sowie deren Analoge mit Ethoxy- oder Isopropoxyanstelle der Methoxygruppen. Bevorzugt sind 3-Mercaptopropyltrimethoxysilan und 3-Mercaptopropyltriethoxysilan.

Hydroxy-Epoxide lassen sich aus einer unvollständigen Umsetzung von Polyolen mit Epichlorhydrin herstellen. Sie sind auch in den üblich erhältlichen Glycidylethern von Polyolen stets als Nebenprodukte vorhanden und lassen sich durch übliche Trennoperationen isolieren. Beispiele solcher Hydroxy-Epoxide sind Trimethylolpropandiglycidylether (als Gemisch enthalten in Trimethylolpropantriglycidylether), Glycerindiglycidylether (als Gemisch enthalten in

Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet. Es können aber auch andere ähnliche Hydroxy-Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (III), der in handelsüblichen flüssigen Epoxidharzen, hergestellt aus Bisphenol-A (R = $CH_3$) und Epichlorhydrin, zu etwa 15 % enthalten ist, sowie die entsprechenden β-Hydroxyether, die bei der Reaktion von Bisphenol-F (R = H) oder des Gemisches von Bisphenol-A und Bisphenol-F mit Epichlorhydrin gebildet werden.

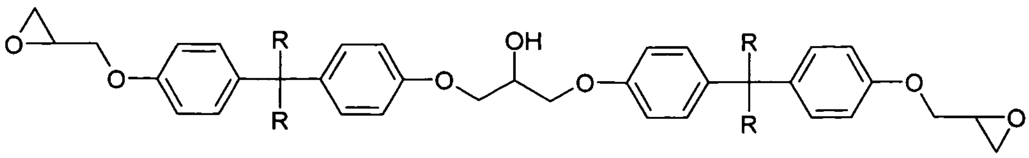 (III)

Die Verbindung **A** kann auch erhalten werden durch eine Reaktion eines mindestens zwei Isocyanat-reaktiven Gruppen aufweisenden Polymeren **A3-1** mit mindestens einer Verbindung **AY.** Die Verbindung **AY** weist hierbei eine NCO-Gruppe sowie eine oder mehrere Alkoxysilangruppe auf. Das Polymer **A3-1** kann hierbei beispielsweise ein Polyol, ein Polymercaptan oder ein Polyamin sein. Selbstverständlich sind auch Polymere hierfür geeignet, welche gleichzeitig mehrere unterschiedliche NCO-reaktive Gruppen aufweisen. Als Polyole kommen hierbei insbesondere die für die Herstellung der Polyurethanprepolymeren **A3** bereits beschriebenen Polyole in Frage. Als Polymercaptane kommen insbesondere Mercapto-terminierte Polyalkylenen und Thiokole in Frage.

Eine weitere Möglichkeit für Verbindungen **A3-1** sind Produkte aus der Umsetzung von Polyolen, Polymercaptanen, Polyolen mit Polyisocyanaten, und zwar in einem Isocyanatunterschuss. Der verwendete Unterschuss an Isocyanaten ist hierbei auf die Funktionalität des Polyisocyanats, des Polyols, Polyamins oder Polymercaptans sowie deren Molekulargewicht abgestimmt, so dass keine allzu viskosen Verbindungen **A3-1** entstehen. Es ist weiterhin möglich, **A3-1** als Addukte oder Kettenverlängerungen eines Polyurethanprepolymeren **A3** mit Diaminen, Diolen oder Dimercaptanen im stöchiometrischen Überschuss herzustellen.

Die Verbindung **AY** ist ein Isocyanatosilan, insbesondere ein Isocyanatosilan ausgewählt aus der Gruppe (3-Isocyanatopropyl)trimethoxysilan, (Isocyanatomethyl)methyldimethoxysilan, (Isocyanatomethyl)trimethoxysilan sowie deren Analoge mit Ethoxy- oder Isopropoxy- anstelle der Methoxygruppen.

Die erfindungsgemässe Zusammensetzung umfasst weiterhin mindestens ein polymeres Thixotropiermittel **B.** Dieses Thixotropiermittel kann einerseits durch eine Homopolymerisationsreaktion eines (Meth)acrylates **B1** gewonnen werden, welches drei oder mehr (Meth)acrylatgruppen aufweist. Das Thixotropiermittel kann andererseits durch eine Copolymerisationsreaktion eines (Meth)acrylates **B1** mit mindestens einem weiteren (Meth)acrylat gewonnen werden, und zwar so, dass die (Meth)acrylat-Mischung eine mittlere (Meth)acrylatfunktionalität $\bar{f}$ von 2.5 bis 4.5 besitzt.

Bevorzugt ist der Anteil des polymeren Thixotropiermittels **B** zwischen 0.1 und 10 Gew.-%, insbesondere zwischen 0.5 und 5 Gew.-%, bezogen auf das Gewicht der Zusammensetzung.

Das Thixotropiermittel **B** darf hierbei keine wesentlichen Anteile von funktionellen Gruppen aufweisen, welche mit einer NCO-, Epoxid- oder Alkoxysilangruppe reagieren, da sonst die Zusammensetzung nicht lagerstabil ist. Selbstverständlich ist bevorzugt, wenn dieser Anteil gleich null oder im Wesentlichen gleich null ist. (Meth)acrylate **B1** mit drei oder mehr (Meth)acrylat-Gruppen lassen sich aus einer Veresterung von Triolen und höheren Polyolen erhalten. Alle verwendeten (Meth)acrylate können niedermolekulare oder höhermolekulare Verbindungen sein. Bevorzugt werden (Meth)acrylate mit einem (Meth)acrylat-Equivalentgewicht von 85 bis 400 g/eq, insbesondere 85- 150 g/eq, bevorzugt 95 - 125 g/eq, entsprechend dem Molekulargewicht dividiert durch die Anzahl (Meth)acrylat-Gruppen pro Molekül, verwendet. Bevorzugt weist das (Meth)acrylat **B1** lediglich (Meth)acrylat-Gruppen als funktionelle Gruppen auf und ist bevorzugt ausgewählt aus der Gruppe umfassend Glycerintri(meth)acrylat, Tris(2-Hydroxyethyl)isocyanurattri (meth)acrylat, Trimethylolpropantri(meth)acrylat, Ditrimethylolpropantetra(meth)acrylat, Pentaerythritoltetra(meth) acrylat, Glucusepenta(meth)acrylat, Sorbitolhexa(meth)acrylat, Dipentaerythritolhexa-(meth)acrylat, sowie deren ethoxylierten oder propoxylierten Analoga.

Insbesondere eignen sich (Meth)acrylate mit drei, vier oder fünf (Meth)acrylat-Gruppen pro Molekül. Als besonders bevorzugt sind trifunktionelle (Meth)acrylate.

Falls das (Meth)acrylat **B1** mit einem weiteren Monomer (Meth)acrylat copolymerisiert wird, weist die (Meth) acrylat- Mischung bevorzugt eine mittlere (Meth)acrylatfunktionalität $\bar{f}$ von 2.5 bis 3.5, insbesondere bevorzugt zwischen 2.8 und 3.2, auf.

Besonders bevorzugt werden mono- oder difunktionelle (Meth)acrylate, welche mit tetra-, penta- oder hexafunktionellen (Meth)acrylate copolymerisiert werden können.

Als monofunktionellen (Meth)acrylate eignen sich vor allem die Monomere ausgewählt aus der Gruppe umfassend Methyl(meth)acrylat, Isobornyl(meth)acrylat, Tetrahydrofurfuryl(meth)acrylat, 2-Ethylhexyl(meth)acrylat und Isobutyl(meth)acrylat.

Als difunktionellen (Meth)acrylate eignen sich vor allem die (Meth)acrylate ausgewählt aus der Gruppe umfassend $C_2$-$C_8$-Alkylendi(meth)acrylate, insbesondere Hexandi(meth)acrylat, Ethylenglycol(meth)acrylat, Diethylenglycol(meth)acrylat, Triethylenglycol(meth)acrylat, Tetraethylenglycol(meth)acrylat, sowie Epoxy-Di(meth)acrylate.

Unter Epoxy-Di(meth)acrylate werden hierbei sowohl die Umsetzungsprodukte von Bisphenol-A-Digylcidlyethern mit (Meth)acrylsäure, als auch Ester von Bisphenol-A oder alkoxylierten Bisphenol-A mit (Meth)acrylsäure, verstanden, insbesondere mit einem Molekulargewicht zwischen 450 und 1000 g/mol.

Es werden vor allem diejenigen (Meth)acrylate bevorzugt, welche über keinen oder nur geringen Eigengeruch verfügen. Dies ist besonders für Innenanwendungen wichtig, wo ein solcher Eigengeruch störend ist.

Die Polymerisation der (Meth)acrylate erfolgt durch Radikale. Diese Radikale können auf die dem Fachmann bekannten Weise, insbesondere durch Licht oder Wärme aus einem Radikalspender erzeugt werden. Bevorzugterweise werden die Radikale aus organischen Peroxiden erzeugt. Vorteilhaft werden organische Peroxide verwendet, welche eine Zersetzungstemperatur $T_{1/2}$ (1 h) zwischen 100°C und 50°C, insbesondere zwischen 70 und 95°C aufweisen. Die angegebene Zersetzungstemperatur ist dem Fachmann unter dem englischen Fachterm "1 h Half-Life Temperature" bekannt. Als besonders bevorzugt erwiesen haben sich organische Peroxide, welche ein Peroxid einer Fettsäure sind, insbesondere Dilauroylperoxid.

Aufgrund des bei der Polymerisation eingesetzten Radikalspenders enthält die erfindungsgemässe Zusammensetzung typischerweise zumindest Spuren des für die radikalische Polymerisation der (Meth)acrylate verwendeten organischen Radikalspenders, oder dessen Reaktionsfolgeprodukte.

Die Zusammensetzung kann einkomponentig oder zweikomponentig sein. Im Falle der zweikomponentigen Zusammensetzung wird die Härtung der ersten Komponente, welche das mindestens die Verbindung **A** und mindestens ein polymeres Thixotropiermittel **B** umfasst, durch eine zweite Komponente, die sogenannte Härterkomponente ausgehärtet. Die zweite Komponente enthält eine Verbindung **H,** die mit der Verbindung **A** reagiert oder eine Selbstvernetzung auslöst. Typische Beispiele für diese Verbindungen **H** sind beispielsweise primäre Polyamine, Polymercaptane, Polyole oder Wasser.

Im Falle der einkomponentigen Zusammensetzung härtet diese dadurch aus, dass die Verbindung **A** durch Einfluss von Hitze oder Luftfeuchtigkeit aushärtet. Falls Hitzehärtung erfolgt, kann in der Zusammensetzung ein blokkierter oder hitzereagierender Härter **H'** vorhanden sein, der bei Raumtemperatur im Wesentlichen nicht mit der Verbindung **A** reagiert und bei erhöhter Temperatur, typischerweise bei einer Temperatur von mehr als 80°C deblockiert und einen Verbindung **H** freisetzt oder selber reagiert. Beispiele für einen blockierten oder hitzereagierenden Härter **H'** sind Dicyandiamid oder Carbonsäureanhydride für eine Verbindung **A** mit Epoxygruppen oder ein Säure-blockiertes Amin für eine Verbindung **A** mit Epoxygruppen oder Isocyanatgruppen.

Bevorzugt ist die Zusammensetzung einkomponentig. Falls die Verbindung **A** Alkoxysilan und/oder Isocyanatgruppen aufweist, ist die Zusammensetzung bevorzugt einkomponentig und feuchtigkeitshärtend, insbesondere aushärtend mit aus der Luft stammende Feuchtigkeit.

Die erfindungsgemässe Zusammensetzung kann zusätzlich zu der mindestens einen Verbindung **A** und dem mindestens einen polymeren Thixotropiermittel **B** weiterhin mindestens einen dem Fachmann für Polyurethane, Silane oder Epoxide bekannten Bestandteil wie Füllstoffe, Weichmacher, Lösungsmittel, Haftvermittler, Thixotropiermittel, Stabilisatoren, insbesondere UV- oder Hitzestabilisatoren, oder Katalysatoren enthalten.

Im Falle der zweikomponentigen Zusammensetzungen können die genannten Bestandteile jeweils in beiden Komponenten oder nur in einer Komponente vorhanden sein.

Als Füllstoff ist insbesondere Russ bevorzugt. Typischerweise beträgt der Anteil des Füllstoffs bezogen auf die gesamte Zusammensetzung zwischen 25 und 50 Gew.-%, insbesondere zwischen 25 und 45 Gew.-%, bevorzugt zwischen 30 und 40 Gew.-%, bezogen auf das Gewicht der Zusammensetzung, insbesondere für einen Kleb- oder Dichtstoff.

In einer Ausführungsform der vorliegenden Erfindung enthält die Zusammensetzung keinen Russ. Es lassen sich somit helle, sowie farbige, insbesondere weisse, Zusammensetzungen, insbesondere weisse Polyurethanklebstoffe, herstellen.

Als Haftvermittler sind insbesondere Trialkoxysilane, insbesondere Trimethoxysilane geeignet. Bevorzugt handelt es sich hierbei um Methacryloxy-, Epoxy-, Mercapto- oder um Vinylsilane, insbesondere Methacryloxypropyltrimethoxysilan, 3-Glycidyloxypropyltrimethoxysilan, 3-Mercaptopropyltrimethoxysilan oder Vinyltriethoxysilan. Weiterhin bevorzugt handelt es sich kann es sich beim Haftvermittler um Addukte zwischen primäre Aminogruppen tragenden Trialkoxysilane, insbesondere 3-Aminopropyltrimethoxysilan oder 3-(2-Aminoethylamino)-propyltrimethoxysilan, und Mercapto- oder Epoxysilanen, insbesondere 3-Glycidyloxypropyltrimethoxysilan, 3-Mercaptopropyltrimethoxysilan.

Als Weichmacher sind insbesondere Phtalate oder Adipate, insbesondere Dialkylphtalate, bevorzugt Diisodecylphtalat, oder Dialkyladipate, bevorzugt Dioctyladipat, geeignet.

In einer Ausführungsform der vorliegenden Erfindung weist die Zusammensetzung einen Gehalt von Lösungsmittel von weniger als 5 Gew.-%, insbesondere von weniger als 1 Gew.-%, und einen Gehalt von Weichmacher von weniger als 5 Gew.-% auf, insbesondere von weniger als 1 Gew.-%, auf. Bevorzugt ist die Zusammensetzung frei von Lösungsmittel, insbesondere frei von Lösungsmittel und frei von Weichmacher.

Insbesondere bevorzugt ist es, dass das polymere Thixotropiermittel **B** Bestandteil einer weichermacherfreien Zusammensetzung ist.

Die Zusammensetzung weist vorteilhaft weniger als 1 Gew.-%, bevorzugt weniger als 0.1 Gew.-%, insbesondere 0 Gew.%, an Substanzen auf, die als *VOC* (*V*olatile *O*rganic *C*ompound) gelten.

Es gibt zwei bevorzugte Herstellungsweisen der Zusammensetzung. In der ersten Variante wird zuerst die Verbindung **A**, bei feuchtigkeitsreaktiven Verbindungen **A** unter Ausschluss von Feuchtigkeit, hergestellt. Hierzu wird das polymere Thixotropiermittel **B**, welches in einem separaten Produktionsverfahren durch Radikalspender initiiert aus dem (Meth)acrylat oder den betreffenden (Meth)acrylaten polymerisiert, und gegebenenfalls weiter aufgearbeitet hergestellt wurde, vorteilhaft unter starkem Rühren, zugegeben. Dieses Thixotropiermittel liegt vor der Zugabe insbesondere als Pulver, bevorzugt als sprühgetrocknetes Pulver, oder in Form einer Lösung oder Dispersion, insbesondere in einem Adipat- oder Phtalat-Weichmacher vor.

Die Zugabe des Thixotropiermittels erfolgt vorteilhaft bei einer Temperatur, wie sie üblicherweise für die Herstellung der Verbindung **A** gewählt wird, insbesondere bei 50 - 80°C.

Anschliessend werden typischerweise, falls vorhanden, die weiteren Bestandteile zugemischt. Insbesondere die gegebenenfalls vorhandenen Weichmacher, Lösungsmittel, Katalysatoren oder Stabilisatoren können bereits vor der Thixotropiermittelzugabe zumindest teilweise der Verbindung **A** oder deren Ausgangsprodukt beigemischt worden sein.

In einer zweiten Variante wird das Thixotropiermittel **B** in situ polymerisiert. Diese Variante der Herstellung erfolgt vorteilhaft wie folgt. In einem ersten Schritt wird die Verbindung **A**, bei feuchtigkeitsreaktiven Verbindungen **A** unter Ausschluss von Feuchtigkeit, hergestellt. Es kann von Vorteil sein, dass die Verbindung **A** bereits zu diesem Zeitpunkt Lösungsmittel oder Weichmacher enthält. Anschliessend wird das (Meth)acrylat oder die (Meth)acrylate, entweder zusammen und nacheinander zur Verbindung **A** zugeben. Anschliessend wird typischerweise ein gegebenenfalls eingesetzter Polymerisations-Katalysator zugeben und anschliessend ein Radikalspender. Es kann unter Umständen jedoch von Vorteil sein, dass der allfällige Polymerisations-Katalysator und der Radikalspender bereits vor der Zugabe des (Meth)acrylates der Verbindung **A** zugegeben worden sind. Unter Rühren erfolgt die In-situ- Homo- oder Copolymerisation des Thixotropiermittel B bei einer Temperatur von typischerweise 80 - 95°C. Anschliessend werden typischerweise, falls vorhanden, die weiteren Bestandteile zugemischt.

Falls es sich bei der Verbindung **A** um einen feuchtigkeitsreaktive Verbindung handelt, ist in jedem Schritt bei der Herstellung der Zusammensetzung darauf zu achten, dass einerseits sowohl die Edukte als auch die Bestandteile möglichst wenig Wasser enthalten und andererseits, dass jegliche Herstell- und Konfektionierschritte unter striktem Ausschluss von Feuchtigkeit und insbesondere unter Schutzgas, erfolgen.

Nach der Herstellung erfolgt die Abfüllung in eine für die Lagerung, Transport und Applikation adäquate Verpackung. Es handelt sich hierbei insbesondere um Kartuschen, Fässer, Hobbock, Beutel oder Unipack-Würste. In der Wahl der Verpackungsmaterialien muss darauf geachtet werden, dass die Verpackung dicht ist und genügend Schutz vor Feuchtigkeit bietet, so dass die Lagerstabilität während zumindest 6 Monaten, insbesondere zumindest 9 Monaten, gewährleistet ist, ohne dass ein Aushärten oder ein wesentliches Verdicken erfolgt.

Bei der Applikation als zweikomponentige Zusammensetzung werden die erste und die zweite Komponente miteinander innig gemischt, beispielsweise über eine Mischpistole oder durch einen Mischer, und unmittelbar mit der Oberfläche eines beliebigen Untergrundes zumindest partiell kontaktiert. Durch eine Reaktion, insbesondere eine Additionsreaktion, reagiert die reaktive Zusammensetzung **A** mit der Verbindung **H** und es entsteht ein Artikel, welcher in einem kraftschlüssigen Kontakt mit der ausgehärteten Zusammensetzung steht.

Bei der Applikation als einkomponentige Zusammensetzung kommen die Isocyanat- und/oder Alkoxysilangruppen der Verbindung **A** in Kontakt mit Feuchtigkeit, worauf diese mit Wasser reagieren und vernetzen. Dadurch härtet die Zusammensetzung aus. Entweder kann das zur Aushärtung benötigte Wasser aus der Luft stammen (Luftfeuchtigkeit), oder die Zusammensetzung kann mit einer Wasser enthaltenden Komponente in Kontakt gebracht werden, zum Beispiel durch Bestreichen, beispielsweise mit einem Abglättmittel, durch Besprühen oder mittels Eintauchverfahren, oder es kann der Zusammensetzung eine Wasser enthaltende Komponente zugesetzt werden, zum Beispiel in Form einer wasserhaltigen Paste, die beispielsweise über einen Statikmischer eingemischt wird.

Die beschriebene Zusammensetzung kann als Klebstoff, Dichtstoff, Beschichtung oder Belag verwendet werden. Die bevorzugte Verwendung stellt die Verwendung als Klebstoff oder Dichtstoff dar. Als Dichtstoff werden vor allem Fugen im Bau von Bauwerken und industriellen Gütern mit der Zusammensetzung gefüllt und abgedichtet.

Als Klebstoff wird die Zusammensetzung insbesondere eingesetzt für das Verkleben von diversen Substraten,

beispielsweise zum Verkleben von Bauteilen bei der Herstellung von Automobilen, Schienenfahrzeugen, Schiffen oder anderen industriellen Gütern, sowie als Beschichtung oder Belag für diverse Artikel beziehungsweise variable Untergründe. Als Beschichtungen bevorzugt sind Schutzanstriche, Versiegelungen, Schutzbeschichtungen und Primer. Unter den Belägen sind besonders Bodenbeläge als bevorzugt zu nennen. Solche Beläge werden hergestellt, indem typischerweise eine Zusammensetzung auf den Untergrund gegossen und egalisiert wird, wo sie zu einem Bodenbelag aushärtet. Beispielsweise werden solche Bodenbeläge für Büros, Wohnbereiche, Spitäler, Schulen, Lagerhallen, Parkgaragen und andere private oder industrielle Anwendungen verwendet.

Falls es sich bei der Verbindung **A** um eine Epoxidgruppen tragende Verbindung handelt, welche mittels einer zweiten Härterkomponente, insbesondere mit Polyaminen, ausgehärtet wird, kann diese Zusammensetzung sehr vorteilhaft im Bau von Bauwerken, wie Gebäude, Brücken und Tunnels eingesetzt werden. Für diese Zwecke ist es erforderlich, dass die eingesetzten Klebstoffe sehr gute Haftungen auf Beton, mineralischen Untergründen und Stahl aufweisen sowie grosse Eigenfestigkeiten aufweisen.

Die Zusammensetzung wird mit der Oberfläche eines beliebigen Untergrundes zumindest partiell kontaktiert. Bevorzugt ist eine gleichmässige Kontaktierung in Form eines Dicht- oder Klebstoffes, einer Beschichtung oder eines Belages, und zwar in den Bereichen, welche für den Einsatz eine Verbindung in Form einer Verklebung oder Dichtung benötigen oder aber deren Untergrund abgedeckt sein soll. Es kann durchaus nötig sein, dass der Untergrund beziehungsweise der zu kontaktierende Artikel im Vorfeld des Kontaktierens einer physikalischen und / oder chemischen Vorbehandlung unterzogen werden muss, beispielsweise durch Schleifen, Sandstrahlen, Bürsten oder dergleichen, oder durch Behandeln mit Reinigern, Lösemitteln, Haftvermittlern, Haftvermittlerlösungen oder Primern, oder dem Aufbringen einer Haftbrücke oder eines Sealers. Nach dem Kontaktieren erfolgt bei feuchtigkeitsreaktiven Zusammensetzungen, wie bereits erwähnt, eine Aushärtung unter dem Einfluss von Wasser.

Schliesslich entsteht ein Artikel, welcher in einem kraftschlüssigen Kontakt mit der ausgehärteten Zusammensetzung steht.

Die erfindungsgemässen Zusammensetzungen sind thixotrop. Dies zeigt sich unter anderem in einer verbesserten Standfestigkeit. Weiterhin weisen die erfindungsgemässen Zusammensetzungen bevorzugt einen Thixotropie-Index (TI) von mehr als 6, insbesondere von mehr als 10, bevorzugt von mehr als 20, auf, welcher sich durch das Verhältnis der Viskositäten bei einer Scherrate $1s^{-1}$ zu Scherrate $100s^{-1}$, gemessen bei einer Temperatur von 20°C, ergibt:

$$TI = \frac{\eta(1s^{-1})}{\eta(100s^{-1})} \geq 1$$

Es hat sich weiterhin gezeigt, dass sich diese Zusammensetzungen auch durch einen stark reduzierten Glanz auszeichnen. Ein allzu hoher Glanz kann bei Klebstoffen und Dichtstoffen nachteilig sein, da Kleb- und Dichtstoffe mit einem hohen Glanzwert Licht reflektieren können und daher eher auffallen. Tiefe Glanzgrade werden deshalb primär aus ästhetischen Gründen bevorzugt. Es konnte gezeigt werden, dass die erfindungsgemässen Zusammensetzungen gegenüber den entsprechenden Zusammensetzungen ohne Thixotropiermittel einen stark reduzierten Glanz aufweisen. Deshalb kann das polymere Thixotropiermittel **B** auch als polymeres Mattierungsmittel für Kleb-, Dichtstoffe sowie Beläge eingesetzt werden.

Es wurde weiterhin gefunden, dass das polymere Thixotropiermittel B kleine Partikel aufweist, die je nach Prozessparameter leicht unterschiedlich sind. Als besonders geeignet gezeigt haben sich Partikelgrössen von kleiner als 5 Mikrometer, insbesondere von kleiner als 0.5 Mikrometern. Zu grosse Partikel führen zu einem Absetzen der Partikel und damit zu Lagerstabilitätsproblemen sowie zu einer Verschlechterung der Thixotropiereigenschaften.

**Beispiele**

**Herstellung von Thixotropiermittel B enthaltenden Zusammensetzung**

**1.) Isocyanat-Gruppen aufweisende Zusammensetzung**

Herstellung eines Polyurethanprepolymers *Prep1*

2155 g Polyol Acclaim® 4200 N (Bayer), 4310 g Polyol Caradol® MD34-02 (Shell) und 1035 g 4,4'-Methylendiphenyldiisocyanat (MDI; Desmodur® 44 MC L, Bayer) wurden nach bekanntem Verfahren bei 80 °C zu einem NCOterminierten Prepolymeren umgesetzt. Das Reaktionsprodukt hatte einen titrimetrisch bestimmten Gehalt an freien Isocyanat-Gruppen von 2.36 Gew.-%. *Prep1* ist ein Beispiel für eine Verbindung **A3.**

Zur Herstellung einer 5 Gew.-%-igen Zusammensetzung wurden zu 470g des *Prep1* 25 g eines (Meth)acrylates **B** oder eines Gemisches eines (Meth)acrylates **B** mit einem weiteren (Meth)acrylat zugegeben, mit Stickstoff überlagert und unter Rühren auf 90°C erhitzt. Hierzu wurde ein Gemisch, bestehend aus 1.5 g Dilauroylperoxid und 3.5 g Diisodecylphtalat zugegeben. Unter Rühren wurde die Gel-Bildung abgewartet, welche nach etwa 10 Minuten auftrat. Anschliessend wurden noch etwa 30 Minuten bei 90°C weitergerührt und auf Raumtemperatur abgekühlt.

Zur Herstellung einer 10 Gew.-%-igen Zusammensetzung wurden in analoger Weise von 445 g des *Prep1* und 50 g eines (Meth)acrylates **B** oder eines Gemisches eines (Meth)acrylates **B** mit einem weiteren (Meth)acrylat ausgegangen.

**Eignung des Thixotropiermittels**

Für die Beurteilung der Eignung als Thixotropiermittels wurde die jeweilige Zusammensetzung in eine Aluminiumkartusche abgefüllt und als Dreiecksraupe auf einen liegende Fläche appliziert und nach 7 Tagen aufgeschnitten und das Abweichen von der Dreiecksform nach folgendem Beurteilungsschlüssel bei Gew.-% von **B**, bezogen auf das Gewicht der Zusammensetzung beurteilt:

1 kein wesentliches Abweichen bei 5 Gew.-%
2 leichtes Abweichen bei 5 Gew.-%, kein Abweichen bei 10 Gew.-%
3 starkes Abweichen bei 5 Gew.-%, schwaches Abweichen bei 10 Gew.-%
4 sehr starkes Abweichen bei 10 Gew.-%

Die Eignung der Zusammensetzungen **B** als Thixotropiermittel wurde die Thixotropiermittel wie folgt hergestellt:

Tabelle 1

| Eignung als Thixotropiermittel. | | | |
|---|---|---|---|
| ***Bezeichnung*** | Monomer | $\bar{f}$ | Eignung |
| ***1*** | Dipentaerythritol pentaacrylat (DiPEPA) | 5 | 2 |
| ***2*** | Ditrimethylolpropan tetraacrylat (DiTMPTTA) | 4 | 2 |
| ***3*** | Pentaerythritol tetraacrylat (PETA-4) | 4 | 1 |
| ***4*** | Trimethylolpropan trimethacrylat (TMPTMA) | 3 | 1 |
| ***5*** | Trimethylolpropan triacrylat (TMPTA) | 3 | 1 |
| ***6*** | Pentaerythritol triacrylat (PETA-3) | 3 | 1 |
| ***7*** | Tris(2-hydroxyethyl)isocyanurat triacrylat | 3 | 2 |
| ***8*** | Isobutylmethacrylat / PETA-4 (3 mol/7 mol) | 3 | 1 |
| ***9*** | Methylmethacrylat / PETA-4 (3 mol/7 mol) | 3 | 1 |
| ***10*** | Isobutylmethacrylat / PETA-4 (3 mol/4 mol) | 2.7 | 2 |
| ***11*** | Methylmethacrylat / PETA-4 (3 mol/4 mol) | 2.7 | 2 |
| | | | |
| ***Ref.1*** | Hexandioldiacrylat | 2 | 3 |
| ***Ref.2*** | Methylmethacrylat / PETA-4 (9 mol/1 mol) | 1.3 | 4 |
| ***Ref.3*** | Methylmethacrylat / TMPTA (9 mol/1 mol) | 1.2 | 4 |
| ***Ref.4*** | Isobornyl methacrylat (IBOMA) | 1 | 4 |
| ***Ref.5*** | Isobornyl acrylat (IBOA) | 1 | 4 |
| ***Ref.6*** | Methylmethacrylat (MMA) | 1 | 4 |
| ***Ref.7*** | 2-Ethylhexylacrylat (EHA) | 1 | 4 |
| ***Ref.8*** | Isobutylmethacrylat | 1 | 4 |
| ***Ref.8*** | 1,6-Hexandiol dimethacrylat (HDDMA) | 2 | 3 |

Tabelle 1 (fortgesetzt)

| Eignung als Thixotropiermittel. | | $\bar{f}$ | |
|---|---|---|---|
| ***Bezeichnung*** | Monomer | | Eignung |
| ***Ref.9*** | 1,6-Hexandiol diacrylat (HDDA) | 2 | 3 |

**Epoxidharz basierende Zusammensetzung**

Es wurden 100 g Trimethylolpropantrimethacrylat (TMPTMA) in 1000g Bisphenol-A-Diglycidylether-Flüssigharz (BADGE) (Araldite ® GY 250) bei 90°C unter Rühren gelöst. Das Reaktionsgefäss wurde drei Mal evakuiert und mit Stickstoff geflutet. Die Reaktion wurde unter Stickstoff durchgeführt. Nach etwa 30 Minuten wurde 3 g Dilauroylperoxid hinzugegeben und stark gerührt. Es entstand eine hochviskose glasige Masse. Der Epoxygehalt dieser Paste, im Folgenden als *EP-Paste1* bezeichnet, betrug 4.6 eq/kg. Diese *EP-Paste1* wies einen Gehalt von 9.1 Gew. % an **B** auf.

**Herstellung von Klebstoffen**

**1. Polyurethan-Klebstoffe**

Es wurden einkomponentige feuchtigkeitshärtende Polyurethanklebstoffe der Zusammensetzung gemäss Tabelle 2 hergestellt. Hierbei wurde für einen 5 kg- Ansatz gemäss den Mengen von Tabelle 2 zuerst zu *Prep1* und Weichmacher das (Meth)acrylat zugegeben, mit Stickstoff überlagert und unter Rühren auf 90 °C erwärmt. Bei 90°C wurde das Peroxid zugegeben. Anschliessend wurde während weiteren 10 Minuten gerührt und anschliessend auf 50°C abgekühlt. Hierauf wurde das Trockenmittel sowie Russ und Kaolin eingemischt und während 15 Minuten unter Vakuum gemischt. Es entstand eine homogene, schwarze Paste. Schliesslich wurde der Katalysator zugegeben und nochmals 10 Minuten gerührt und in Aluminiumkartuschen abgefüllt.

Tabelle 2.

| Polyurethan-Klebstoff-Zusammensetzungen (Angaben in Gew.-%) | | | | | | | |
|---|---|---|---|---|---|---|---|
| Bezeichnung | ***KP-Ref. 1*** | ***KP1*** | ***KP2*** | ***KP3*** | ***KP4*** | ***KP5*** | ***KP6*** |
| Prepolymer (*Prep1*) | 45.0 | 45.0 | 45.0 | 45.0 | 45.0 | 45.0 | 45.0 |
| Diisodecylphthalat | 24.7 | 24.7 | 24.7 | 24.7 | 24.7 | 24.7 | 24.7 |
| TMPTMA | 0.00 | 1.75 | 2.25 | 3.00 | 3.50 | 4.00 | 5.25 |
| Dilauroylperoxid | 0.30 | 0.30 | 0.30 | 0.30 | 0.30 | 0.30 | 0.30 |
| Trockenmittel | 0.30 | 0.30 | 0.30 | 0.30 | 0.30 | 0.30 | 0.30 |
| Russ | 15.0 | 15.0 | 15.0 | 15.0 | 15.0 | 15.0 | 15.0 |
| Kaolin | 14.6 | 12.9 | 12.4 | 11.6 | 11.1 | 10.6 | 9.35 |
| Katalysator | 0.10 | 0.10 | 0.10 | 0.10 | 0.10 | 0.10 | 0.10 |

**2. Epoxydharzklebstoffe**

2.1. 1-Komponentiger Hitzehärtender Epoxidharz-Klebstoffe

Die EP-Paste1 wurde mit Bisphenol-A-Digylcidylether, dem Epoxy-Reaktivverdünner, Dicyandiamid und den Füllstoffen in einer Blechbüchse eingewogen und bei 50°C während 1 h unter Vakuum homogenisiert.
Anschliessend wurde aus dem Klebstoff ein Klebstoff-Fell hergestellt und während 30 Min. bei 180°C gehärtet. Probehanteln wurden ausgestanzt und anschliessend auf die Zugfestigkeit, Bruchdehnung und E-Modul geprüft (Hanteln, Länge: 75mm, Breite: 4mm, Dicke: 2mm; Prüfgeschwindigkeit: 2 mm/min (DIN 53 504)) (siehe Tabelle7).

Tabelle 3.

| Zusammensetzungen von 1 Komp.-Epoxidharzklebstoffen (alle Angaben in Gewichtsteilen) | | |
|---|---|---|
| Bezeichnung | ***KE-Ref.1*** | ***KE1*** |
| BADGE | 60.0 | 10.0 |
| *EP-Paste1* | - | 55.0 |
| Polypropylenglycol-diglycidylether | 10.0 | 10.0 |
| Dicyandiamid | 5.0 | 5.0 |
| Wollastonite | 12.0 | 12.0 |
| Kreide | 13.0 | 13.0 |
| *Total:* | *100.0* | *105.0* |
| Gesamtkonzentration **B** [%] | **0** | **4.7** |

2.2 2-Komponentige Epoxidharz-Klebstoffe

Die EP-Paste1 wurde mit Bisphenol-A-Digylcidylether, dem Reaktivverdünner, und den Füllstoffen in einer Blechbüchse eingewogen und bei 40°C während 1 h unter Vakuum homogenisiert.
Anschliessend wurde eine Mischung von Aminen und Beschleuniger zur Büchse zugegeben und während weiteren 5 Minuten unter Vakuum gerührt. Der Klebstoff wurde in eine Kartusche umgefüllt und sofort in eine Proben-Gussform ausgetragen.
Die Proben wurden während 7 Tagen bei Normklima gelagert, danach aus der Probenform entnommen und anschliessend im 3-Punkte Biegetest geprüft: Hanteln, Länge: 150mm, Breite: 10mm, Dicke: 10mm; Prüfgeschwindigkeit: 2 mm/min (in Anlehnung an ISO 178) (siehe Tabelle8).

Tabelle 4.

| Zusammensetzungen von 2 Komp.-Epoxidharzklebstoffen (alle Angaben in Gewichtsteilen) | | | | |
|---|---|---|---|---|
| Bezeichnung | ***KE-Ref.2*** | ***KE2*** | ***KE-Ref.3*** | ***KE3*** |
| Erste Komponente (Harz) | | | | |
| BADGE | 60.0 | 10.0 | 68.5 | - |
| *EP-Paste1* | - | 55.0 | - | 75.0 |
| Polypropylenglycol-diglycidylether | 10.0 | 10.0 | - | - |
| Wollastonite | 20.0 | 20.0 | 10.0 | 10.0 |
| Kreide | 20.0 | 20.0 | 18.0 | 18.0 |
| Zweite Komponente (Härter) | | | | |
| Isophorondiamin | 13.0 | 13.0 | 13.4 | 13.4 |
| 1,3-Xylylendiamin | 15.0 | 15.0 | 15.6 | 15.6 |
| 2,4,6 Tri(dimethylaminomethyl)phenol | 5.0 | 5.0 | 5.2 | 5.2 |
| *Total:* | *143.0* | *148.0* | *130.70* | *137.2* |
| Gesamtkonzentration **B** [%] | **0** | **3.3** | **0** | **4.9** |

**3. Alkoxysilan-Klebstoffe**

Herstellung von *Prep2:*

*Prep2* ist das Umsetzungsprodukt eines Isocyanat-terminierten Prepolymer (hergestellt nach üblichem Herstellverfahren aus Acclaim®12200 (Bayer) und IPDI NCO/OH-Verhältnis von 2) mit dem Aminosilan gemäss Beispiel 5 der US 5,364,955. Diese Umsetzung erfolgt in bekannter Art und Weise. *Prep2* weist einen titrimetrisch bestimmten

Gehalt an freien Isocyanat-Gruppen von 0.00 Gew.-% auf.

Herstellung von ***KS1***:

In einem handelsüblichen 1 kg Mischer wurden 270 g (100 Teile) des Alkoxysilangruppen aufweisenden Polyurethan-Prepolymers *Prep2* mit 100 g (37 Teile) Weichmacher DIDP 5 min gemischt. Zu dieser Mischung wurden 20g (7 Teile) Trimethylolpropantrimethacrylat (TMPTMA, Fluka Chemie) und 2.4 g (0.9 Teile) Dilauroylperoxid (Fluka Chemie) zugegeben und die Mischung auf 90°C erhitzt. Dann wurde 30 min unter Vakuum bei 90°C gerührt, bis sich eine hochviskose, standfeste Masse gebildet hatte. Dann wurden 54 g (20 Teile) Titandioxid und 325 g (120 Teile) beschichtete Kreide während 15 min bei 60°C eingemischt. Anschliessend wurden 8 g (3 Teile) Diaminosilan (Silquest® A-1120), 2.7 g (1 Teil) UV-Stabilisator (Tinuvin 5060, Ciba Specialities) und 5.4 g (2.1 Teile) Vinylsilan (Silquest® A-171) zugegeben und ohne Heizung unter Vakuum 10 min eingerührt. Zum Schluss wurden noch 1.18 g (0.5 Teile) Dibutylzinndilaurat (DBTL) und 10 g (4 Teile) Weichmacher DIDP zugegeben und 10 min unter Vakuum eingemischt.

In analoger Weise wurden die in Tabelle 5 angegeben Beispiele vorgegangen. In den Beispielen ***KMS1*** und ***KMS-Ref.1*** wurde anstelle des alkoxysilangruppen aufweisenden Polyurethan-Prepolymer *Prep2* (als ein Beispiel für eine Verbindung **A2-1**) ein kommerzielles MS-Polymer (MS-S303H erhältlich bei Kaneka Corp.) (als Beispiel für eine Verbindung **A2-2**) eingesetzt. Bei den Referenz-Klebstoffen ***KS-Ref.1*** und ***KMS-Ref.1*** wurde jedoch kein TMPTMA und Peroxid eingesetzt und demzufolge entfiel auch der Schritt des Heizens auf 90°C.

Tabelle 5.

| Zusammensetzungen von Alkoxysilanklebstoffen (alle Angaben in Gewichtsteilen. | | | | | |
|---|---|---|---|---|---|
| Bezeichnung | ***KS1*** | ***KS2*** | ***KS-Ref.1*** | ***KMS1*** | ***KMS-Ref.1*** |
| *Prep2* | 100 | 100 | 100 | - | - |
| MS-S303H (Kaneka Corp.) | - | - | - | 100 | 100 |
| Diisodecylphthalat | 37 | 37 | 37 | 39 | 46 |
| TMPTMA | **7** | **4** | **0** | **7** | **0** |
| Dilauroylperoxid | 0.9 | 0.9 | 0 | 0.9 | 0 |
| Titandioxid | 20 | 20 | 20 | 20 | 20 |
| Beschichtete Kreide | 120 | 120 | 120 | 120 | 120 |
| Aminosilan(Silquest A-1120) | 3 | 3 | 3 | 3 | 3 |
| Tinuvin 5060 | 1 | 1 | 1 | 1 | 1 |
| Vinylsilan (Silquest A-171) | 2 | 2 | 2 | 2 | 2 |
| Dibutylzinndilaurat | 0.44 | 0.44 | 0.48 | 1.82 | 1.82 |
| Diisodecylphthalat | 4 | 4 | 19 | 6 | 6 |
| *Total* | *295.34* | *292.34* | *302.48* | *300.72* | *299.82* |
| Gesamtkonzentration **B** [%] | **2.4** | **1.4** | **0** | **2.3** | **0** |

**Resultate**

Von diesen Klebstoffen wurde die folgenden Eigenschaften bestimmt und in Tabellen 6 bis 9 zusammengefasst:

- Ablaufen: Es wurde eine Dreiecksraupe (Höhe 22 mm, Basis 8 mm) auf eine Glasplatte appliziert (1). Anschliessend wurde die Platte sofort vertikal aufgestellt (2) und bei Raumtemperatur und 50% rel. Luftfeuchtigkeit ausgehärtet. Es wurde die Standfestigkeit beurteilt, in dem das Ablaufen des Klebstoffs gemessen wurde (3). Schematisch dargestellt:

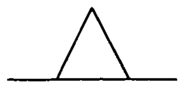
(1)

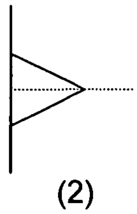
(2)

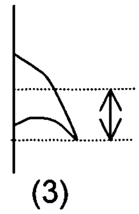
(3)

- Viskosität: Die Viskosität wurde mit einem Viskosimeter (Rheomat) bestimmt (5 $s^{-1}$, 20°C, Platte ∅= 25mm, Spaltdicke 1 mm)

- Haftung auf Glas: Die Glasoberfläche (Floatglas, kommerziell erhältlich bei Firma Rocholl, Schönbrunn, Deutschland) wurde mit Sika® Aktivator (kommerziell erhältlich bei Sika Schweiz AG) vorbehandelt. Nach einer Ablüftezeit von 30 Minuten wurde der Klebstoff appliziert und während 7 Tagen bei Raumtemperatur und 50 % rel. Luftfeuchtigkeit ausgehärtet. Anschliessend wurde die Probe 7 Tage bei Raumtemperatur in Wasser gelagert, daran anschliessend 1 Tage bei 80°C im Trockenschrank gelagert und schliesslich während 7 Tagen im Kataplasma (70°C und 100% rel. Luftfeuchtigkeit) gelagert. Nach jeder Lagerung wurde die Haftung mittels 'Raupentest' geprüft. Hierbei wird am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen der kohäsiven Anteils der Haftfläche:

  1 = > 95 % Kohäsionsbruch
  2 = 75 - 95 % Kohäsionsbruch
  3 = 25 - 75 % Kohäsionsbruch
  4 = < 25 % Kohäsionsbruch
  5 = adhäsiver Bruch

- Zugscherfestigkeit: nach DIN EN 1465 (20 mm/min)

- Zugfestigkeit: nach DIN 53504 (200 mm/min)

- Bruchdehnung: nach DIN 53504 (200 mm/min)

- E-Modul: nach DIN 53504 (200 mm/min)

- Weiterreisswiderstand DIN 53515 (500mm/min)

- Thixotropie Index (TI): Das Verhältnis der Viskosität bei einer Scherrate 1$s^{-1}$ zu Scherrate 100$s^{-1}$ gemessen bei einer Temperatur von 20°C

$$TI = \frac{\eta(1s^{-1})}{\eta(100s^{-1})} \geq 1$$

- Auspresskraft (APK): Für die Bestimmung der Auspresskraft wurde eine mit Klebstoff gefüllte Kartusche nach Konditionierung während 12 Stunden bei 23°C geöffnet und eine Düse von 5 mm aufgeschraubt. Und mit einem Auspressgerät "Zwick 1120" die Kraft bestimmt, um den Klebstoff mit einer Auspressgeschwindigkeit von 60 mm/min auszupressen. Der angegebene Wert ist ein Mittelwert nach 85 ml Auspressung.

Tabelle 6.

| Eigenschaften der Polyurethan-Klebstoffe. × Viskosität bei Scherrate $1s^{-1}$ ist nicht mehr messbar | | | | | | | |
|---|---|---|---|---|---|---|---|
| Bezeichnung | ***KP-Ref.1*** | ***KP1*** | ***KP2*** | ***KP3*** | ***KP4*** | ***KP5*** | ***KP6*** |
| Gehalt an **B** [%] | **0.00** | **1.75** | **2.25** | **3.00** | **3.50** | **4.00** | **5.25** |
| Ablaufen [mm] | 32 | 14 | 9 | 2 | 0.5 | 0 | 0 |
| Viskosität [Pas] | 256 | 1200 | 1750 | 2360 | 3150 | 3770 | 6180 |
| Haftung auf Glas | | | | | | | |
| 7d/RT | 1 | 1 | 1 | 1 | 1 | 1 | 1 |
| 7d/Wasser | 1 | 1 | 1 | 1 | 1 | 1 | 1 |
| 1 d/80°C | 1 | 1 | 1 | 1 | 1 | 1 | 1 |
| 7d/Kataplasma | 1 | 1 | 1 | 1 | 1 | 1 | 1 |
| Zugscherfestigkeit [MPa] | 4.8 | 4.5 | 4.7 | 5.7 | 5.8 | 5.7 | 6.5 |
| Zugfestigkeit [MPa] | 7.4 | 7.9 | 8.2 | 8.6 | 8.7 | 9.4 | 9.7 |
| Bruchdehnung [%] | 370 | 340 | 330 | 340 | 330 | 340 | 320 |
| E-Modul (0.5-1.0%)[MPa] | 2.4 | 3.1 | 3.5 | 3.8 | 4.1 | 4.3 | 4.5 |
| Thixotropie Index (TI): | 5.1 | 15.4 | 22.7 | 23.5 | 25.5 | 31.3 | N/A× |
| Auspresskraft [N] | 29 | 463 | 500 | 694 | 827 | 965 | 1515 |

Tabelle 7.

| Eigenschaften der 1-Komponenten-Epoxidharzklebstoffe. | | |
|---|---|---|
| Bezeichnung | ***KE-Ref. 1*** | ***KE1*** |
| Gesamtkonzentration **B** [%] | **0** | **4.7** |
| Ablaufen nach 1 Woche bei Normklima [mm] | > 50 | 0 |
| Ablaufen nach Aushärtung (30' 180°C) [mm] | > 50 | 10 |
| Zugfestigkeit [MPa] | 62.0 | 71.0 |
| Bruchdehnung [%] | 2.5 | 4.5 |
| E-Modul (0.5-1.0%) [MPa] | 3200 | 3175 |

| Bezeichnung | ***KE-Ref.2*** | ***KE2*** | ***KE-Ref.3*** | ***KE3*** |
|---|---|---|---|---|
| Gesamtkonzentration **B** [%] | **0** | **3.3** | **0** | **4.9** |
| Ablaufen nach 1 Woche Normklima [mm] | > 50 | 2 | > 50 | 0 |
| Maximalkraft 3-Punkte-Biegung [MPa] | 25.5 | 24.1 | 11.2 | 11.1 |
| Anfangsmodul 3-Punkte-Biegung [MPa] | 4780 | 4160 | 3710 | 3770 |

Tabelle 8. Eigenschaften der 2-Komponenten-Epoxidharzklebstoffe.

Tabelle 9.

| Eigenschaften der Alkoxysilan-Klebstoffe. | | | | | |
|---|---|---|---|---|---|
| Bezeichnung | ***KS1*** | ***KS2*** | ***KS-Ref. 1*** | ***KMS1*** | ***KMS-Ref. 1*** |
| Gehalt an **B** [%] | **2.4** | **1.4** | **0** | **2.3** | **0** |
| Standfestigkeit | gut | gut | schlecht | gut | schlecht |
| Ablaufen [mm] | 3 | 5 | >50 | 3 | >50 |
| Zugfestigkeit [MPa] | 2.9 | 2.4 | 2.2 | 2.5 | 2.0 |
| Bruchdehnung [%] | 169 | 195 | 236 | 467 | 386 |
| Weiterreisswiderstand[N/mm] | 4.5 | 4.3 | 5.5 | 16.7 | 15.4 |
| E-Modul 0-5% [MPa] | 4.8 | 3.8 | 2.0 | 2.0 | 2.0 |
| E-Modul 0-25% [MPa] | 3.5 | 3.0 | 1.7 | 1.4 | 1.2 |
| E-Modul 0-50% [MPa[ | 3.0 | 2.5 | 1.4 | 1.2 | 1.0 |
| E-Modul 0-100% [MPa] | 2.3 | 2.0 | 1.3 | 1.0 | 0.8 |
| Shore A | 60 | 55 | 46 | 20 | 37 |

Die Tabellen 6 bis 9 zeigen, dass bereits kleine Mengen des polymeren Thixotopierungsmittes **B** dazu führen, dass die damit formulierten Zusammensetzungen standfest werden, und die damit formulierten Zusammensetzungen als Klebstoffe verwendbar sind. Insbesondere zeigt sich, dass der Zusatz des polymeren Thixotopierungsmittes **B** zu keiner oder keiner wesentlichen Verschlechterung der mechanischen Eigenschaften führt.

**Eignung als Mattierungsmittel**

Der Glanzwert wurde mittels Lichtreflexion auf einer aufgezogenen Schicht von 2 mm-Schichtdicke, welche mittels eines Holzspaltes auf eine Glasplatte plan aufgezogen wurde, gemessen. Nach Trocknen während 24 Stunden wurde der Glanzwert als Dreifachbestimmung mit einem Glanzmessgerät (Erichsen Pico Glossmaster 500-20°/60°) bei einem Glanzwinkel von 60 ° gemessen.

Tabelle 10

| Verbindung **B** als Mattierungsmittel. | | | | | | | |
|---|---|---|---|---|---|---|---|
| Bezeichnung | ***KP-Ref. 1*** | ***KP1*** | ***KP2*** | ***KP3*** | ***KP4*** | ***KP5*** | ***KP6*** |
| Gehalt an **B** [Gew.-%] | 0.00 | 1.75 | 2.25 | 3.00 | 3.50 | 4.00 | 5.25 |
| Glanzwert (60°) | 73.9 | 58.9 | 45.4 | 16.2 | 9.6 | 6.8 | 3.2 |

Es ist aus Tabelle 10 ersichtlich, dass die Verbindung **B** als Mattierungsmittel wirkt. Bereits ein kleine Konzentration dieser Substanz führt, dazu, dass die Zusammensetzung stark an ihrem Glanz verliert.

**Patentansprüche**

**1.** Zusammensetzung umfassend
mindestens eine Verbindung **A** mit mindestens zwei reaktiven Gruppen ausgewählt aus der Gruppe umfassend Isocyanat, Epoxid, Alkoxysilan und deren Mischungen,
sowie
mindestens ein polymeres Thixotropiermittel **B**, welches hergestellt wird
durch eine Homopolymerisation eines (Meth)acrylates **B1**,
oder
durch eine Copolymerisation eines (Meth)acrylates **B1** mit mindestens einem weiteren (Meth)acrylat, wobei

die (Meth)acrylat-Mischung eine mittlere (Meth)acrylatfunktionalität $\bar{f}$ von 2.5 bis 4.5 besitzt, und wobei das (Meth)acrylat **B1** drei oder mehr (Meth)acrylatgruppen aufweist.

2. Zusammensetzung gemäss Anspruch 1, **dadurch gekennzeichnet, dass** die Verbindung **A** durch eine Reaktion eines mindestens zwei Isocyanat-Gruppen aufweisenden Polyurethanprepolymeren **A3** mit mindestens einer Verbindung **AX**, welche eine NCO-reaktive Gruppe, insbesondere primäre oder sekundäre Aminogruppe oder SH oder OH, sowie eine oder mehrere Epoxid- oder Alkoxysilangruppen aufweist.

3. Zusammensetzung gemäss Anspruch 1, **dadurch gekennzeichnet, dass** die Verbindung **A** durch eine Reaktion eines mindestens zwei Isocyanatreaktiven Gruppen aufweisenden Polymeren **A3-1** mit mindestens einer Verbindung **AY**, welche eine NCO-Gruppe, sowie eine oder mehrere Alkoxysilangruppe aufweist.

4. Zusammensetzung gemäss Anspruch 1, **dadurch gekennzeichnet, dass** die Verbindung **A** eine Verbindung **A1** ist, welche ein Diglycidylether von Bisphenol-A, Bisphenol-F, Bisphenol-A/F, eine Mischung oder ein Oligomer davon, bevorzugt Bisphenol-A-Digylcidylether, ist.

5. Zusammensetzung gemäss einem der Ansprüche 1 bis 3, **dadurch gekennzeichnet, dass** die Verbindung **A** eine Verbindung **A2-1** ist, welche mindestens zwei Alkoxysilan-Gruppen aufweisendes Polyurethanprepolymer ist.

6. Zusammensetzung gemäss einem der Ansprüche 1 bis 3, **dadurch gekennzeichnet, dass** die Verbindung **A** eine Verbindung **A2-2** ist, welche mindestens zwei Alkoxysilan-Gruppen aufweisender Polyether ist.

7. Zusammensetzung gemäss Anspruch 6, **dadurch gekennzeichnet, dass** die Verbindung **A2-2** durch eine Hydrosilyierungsreaktion aus mindestens zwei C=C-Doppelbindungen aufweisenden Polyether, insbesondere aus allylterminierten Polyoxyalkylenpolymeren, und einer Verbindung $HSi(R^1)_a(OR^2)_{3-a}$, wobei $R^1$ und $R^2$ unabhängig von einander ein $C_1$-$C_8$-Alkylrest, insbesondere Methyl oder Ethyl, und a den Wert 0 oder 1, insbesondere den Wert 0, darstellt.

8. Zusammensetzung gemäss Anspruch 5 oder 6 oder 7, **dadurch gekennzeichnet, dass** die Alkoxysilan-Gruppen Trimethoxysilan- oder eine Triethoxysilangruppen, insbesondere Trimethoxysilangruppen, sind.

9. Zusammensetzung gemäss Anspruch 1, **dadurch gekennzeichnet, dass** die Verbindung **A** eine Verbindung **A3** ist, welche ein mindestens zwei Isocyanatgruppen aufweisendes Polyurethanprepolymer ist.

10. Zusammensetzung gemäss Anspruch 2 oder 9, **dadurch gekennzeichnet, dass** das Isocyanat-Gruppen aufweisende Polyurethanprepolymer **A3** oder das Isocyanat-reaktiven Gruppen aufweisende Polyurethanprepolymeren **A3-1** aus der Reaktion mindestens eines Polyols mit mindestens einem Polyisocyanats, insbesondere mit mindestens einem Diisocyanat, hergestellt wird.

11. Zusammensetzung gemäss Anspruch 10, **dadurch gekennzeichnet, dass** das Polyol ein Polyoxyalkylenpolyol, insbesondere ein Polyoxyalkylendiol oder -triol, insbesondere ein Polyoxypropylendiol oder -triol oder ein EO-endcapped Polyoxypropylendiol oder -triol ist.

12. Zusammensetzung gemäss Anspruch 11, **dadurch gekennzeichnet, dass** das Polyol ein Polyoxyalkylenpolyol mit einem Ungesättigtheitsgrad <0.02 mEq/g und einem Molekulargewicht $M_n$ von 1'000 bis 30'000 g/mol ist.

13. Zusammensetzung gemäss einem der vorhergehenden Ansprüche, **dadurch gekennzeichnet, dass** das (Meth) acrylat **B1** drei, vier oder fünf (Meth)acrylatgruppen aufweist und insbesondere ausgewählt ist aus der Gruppe umfassend Glycerintri(meth)acrylat, Tris(2-Hydroxyethyl)isocyanurattri(meth)acrylat, Trimethylolpropantri(meth) acrylat, Di-trimethylolpropantetra(meth)acrylat, Pentaerythritroltetra(meth)acrylat, Glucusepenta(meth)acrylat, Sorbitolhexa(meth)acrylat, Dipentaerythritolhexa(meth)acrylat, sowie deren ethoxylierten oder propoxylierten Analoga, und bevorzugt Trimethylolpropantrimethacrylat ist.

14. Zusammensetzung gemäss einem der vorhergehenden Ansprüche, **dadurch gekennzeichnet, dass** das polymere Thixotropiermittel **B** ein Copolymer ist, welches aus einer (Meth)acrylat-Mischung mit einer mittlere (Meth) acrylatfunktionalität $\bar{f}$ von 2.5 bis 3.5, insbesondere zwischen 2.8 und 3.2, hergestellt wird.

15. Zusammensetzung gemäss einem der vorhergehenden Ansprüche, **dadurch gekennzeichnet, dass** die Zusammensetzung zumindest Spuren des für die radikalische Polymerisation der (Meth)acrylate verwendeten organischen Radikalspenders, insbesondere ein organisches Peroxid, oder deren Reaktionsfolgeprodukte umfasst.

**16.** Zusammensetzung gemäss Anspruch 15, **dadurch gekennzeichnet, dass** das organische Peroxid eine Zersetzungstemperatur $T_{1/2}$ (1h) zwischen 100°C und 50°C aufweist.

**17.** Zusammensetzung gemäss Anspruch 15 oder 16, **dadurch gekennzeichnet, dass** das organische Peroxid ein Peroxid einer Fettsäure, insbesondere Dilauroylperoxid, ist.

**18.** Zusammensetzung gemäss einem der vorhergehenden Ansprüche, **dadurch gekennzeichnet, dass** der Gehalt an polymerem Thixotropiermittel **B** zwischen 0.1 und 10 Gew.-%, insbesondere zwischen 0.5 und 5 Gew.-%, bezogen auf das Gewicht der Zusammensetzung, beträgt.

**19.** Zusammensetzung gemäss einem der vorhergehenden Ansprüche, **dadurch gekennzeichnet, dass** die Zusammensetzung zusätzlich mindestens einen Weichmacher umfasst.

**20.** Zusammensetzung gemäss Anspruch 19, **dadurch gekennzeichnet, dass** der Weichmacher ein Phtalat oder ein Adipat, insbesondere ein Dialkylphtalat oder Dialkyladipat, bevorzugt Diisodecylphtalat oder Dioctyladipat, ist.

**21.** Zusammensetzung gemäss einem der vorhergehenden Ansprüche, **dadurch gekennzeichnet, dass** die Zusammensetzung zusätzlich mindestens einen Füllstoff, insbesondere Russ, umfasst.

**22.** Zusammensetzung gemäss Anspruch 21, **dadurch gekennzeichnet, dass** der Gehalt an Füllstoff zwischen 25 und 50 Gew.-%, insbesondere zwischen 25 und 45 Gew.-%, bevorzugt zwischen 30 und 40 Gew.-%, bezogen auf das Gewicht der Zusammensetzung beträgt.

**23.** Verfahren zur Herstellung einer Zusammensetzung gemäss einem der Ansprüche 1 bis 22, **dadurch gekennzeichnet, dass** das polymere Thixotropiermittel **B** der Verbindung **A** zugeben wird.

**24.** Verfahren zur Herstellung einer Zusammensetzung gemäss einem der Ansprüche 1 bis 22, **dadurch gekennzeichnet, dass** das polymere Thixotropiermittel **B** in der Verbindung **A** aus (Meth)acrylaten polymerisiert wird.

**25.** Verfahren gemäss Anspruch 24, **dadurch gekennzeichnet, dass** die Polymerisation des Thixotropiermittels **B** bei einer Temperatur zwischen 80 und 100 °C, insbesondere zwischen 80 und 90 °C erfolgt.

**26.** Verfahren gemäss Anspruch 25, **dadurch gekennzeichnet, dass** die Polymerisation des Thixotropiermittels **B** bei durch ein organisches Peroxid mit einer Zersetzungstemperatur $T_{1/2}$ (1 h) zwischen 100°C und 50°C, insbesondere Dilauroylperoxid, erfolgt.

**27.** Verwendung einer Verbindung **B,** welche hergestellt wird
durch eine Homopolymerisation eines (Meth)acrylates **B1**,
oder
durch eine Copolymerisation eines (Meth)acrylates **B1** mit mindestens einem weiteren (Meth)acrylat, wobei die (Meth)acrylat-Mischung eine mittlere (Meth)acrylatfunktionalität $\bar{f}$ von 2.5 bis 4.5, insbesondere von 2.5 bis 3.5, bevorzugt 2.8 bis 3.2, besitzt,
und wobei das (Meth)acrylat **B1** drei oder mehr (Meth)acrylatgruppen aufweist, als Thixotropiermittel.

**28.** Verwendung nach Anspruch 27, **dadurch gekennzeichnet, dass** das (Meth)acrylat **B1** drei, vier oder fünf (Meth) acrylatgruppen aufweist und insbesondere ausgewählt ist aus der Gruppe umfassend Glycerintri(meth)acrylat, Tris(2-Hydroxyethyl)isocyanurattri(meth)acrylat, Trimethylolpropantri(meth)acrylat, Di-trimethylolpropantetra(meth)acrylat, Pentaerythritoltetra(meth)acrylat, Glucusepenta(meth)acrylat, Sorbitolhexa(meth)acrylat, Dipentaerythritolhexa(meth)acrylat, sowie deren ethoxylierten oder propoxylierten Analoga, und bevorzugt Trimethylolpropantrimethacrylat ist.

**29.** Verwendung einer Zusammensetzung gemäss einem der Ansprüche 1 bis 22, als Klebstoff, Dichtstoff, Beschichtung oder Belag, insbesondere als Klebstoff oder Dichtstoff

**30.** Artikel, **dadurch gekennzeichnet, dass** er mit einer Zusammensetzung gemäss einem der Ansprüche 1 bis 22

in Kontakt steht.

**31.** Artikel, **dadurch gekennzeichnet, dass** er mit einer durch Feuchtigkeit erhärteten Zusammensetzung gemäss einem der Ansprüche 1 bis 22 in kraftschlüssigem Kontakt steht.

Europäisches Patentamt

# EUROPÄISCHER RECHERCHENBERICHT

Nummer der Anmeldung
EP 04 00 1406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 02/48228 A (SIKA AG ; KUNITOMO TAKUYA (JP); SUGIYAMA AKIRA (JP)) 20. Juni 2002 (2002-06-20) * Seite 4, Zeile 10 - Seite 4, Zeile 25 * * Seite 5, Zeile 3 - Seite 5, Zeile 22 * * Beispiele 1,comp.,1 * * Tabellen 1,2 * | 1,13,14 | C09J175/04 C09J163/00 C08G18/10 |
| Y | * Ansprüche 1,3 * | 1-26 | |
| A | US 6 265 517 B1 (STUART JONATHAN T) 24. Juli 2001 (2001-07-24) * Spalte 3, Zeile 65 - Spalte 4, Zeile 22 * * Ansprüche 1,6 * | 1-31 | |
| A | EP 0 533 465 A (CIBA GEIGY AG) 24. März 1993 (1993-03-24) * Beispiele 1,2 * * Seite 2, Zeile 39 - Seite 2, Zeile 47 * * Tabelle 4 * * Ansprüche 1,8 * | 1-31 | RECHERCHIERTE SACHGEBIETE (Int.Cl.7) |
| A,D | EP 1 152 019 A (SIKA AG) 7. November 2001 (2001-11-07) * Tabellen 1,2 * * Ansprüche 1-3,10,12 * | 1-31 | C09J C08G |
| A | DATABASE WPI Section Ch, Week 199527 Derwent Publications Ltd., London, GB; Class A13, AN 1995-202513 XP002288906 & JP 07 102020 A (TAKEDA CHEM IND LTD) 18. April 1995 (1995-04-18) * Zusammenfassung * | 1-31 | |

-/--

Der vorliegende Recherchenbericht wurde für alle Patentansprüche erstellt

| Recherchenort | Abschlußdatum der Recherche | Prüfer |
|---|---|---|
| München | 22. Juli 2004 | Heidenhain, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

2

EPO FORM 1503 03.82 (P04C03)

Europäisches Patentamt

# EUROPÄISCHER RECHERCHENBERICHT

Nummer der Anmeldung
EP 04 00 1406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DATABASE WPI<br>Section Ch, Week 199524<br>Derwent Publications Ltd., London, GB;<br>Class A14, AN 1995-183177<br>XP002288907<br>& JP 07 102225 A (FUJITSU LTD)<br>18. April 1995 (1995-04-18)<br>* Zusammenfassung *<br>----- | 1-31 | |
| Y | WO 96/33249 A (HENKEL KGAA ; ERNST WOLFGANG (DE); MAJOLO MARTIN (DE); KLEIN JOHANN (D) 24. Oktober 1996 (1996-10-24)<br>* Seite 1, Zeile 7 - Seite 3, Zeile 5 *<br>* Seite 6, Zeile 22 - Seite 7, Zeile 33 *<br>* Ansprüche 6,7,9,10 *<br>----- | 1-26 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 22. Juli 2004 | Heidenhain, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

2

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 04 00 1406

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2004

| Im Recherchenbericht angeführtes Patentdokument | Datum der Veröffentlichung | Mitglied(er) der Patentfamilie | Datum der Veröffentlichung |
|---|---|---|---|
| WO 0248228 A | 20-06-2002 | JP 2002179753 A | 26-06-2002 |
| | | AU 1916202 A | 24-06-2002 |
| | | BR 0116112 A | 30-03-2004 |
| | | CA 2427947 A1 | 20-06-2002 |
| | | WO 0248228 A2 | 20-06-2002 |
| | | EP 1343851 A2 | 17-09-2003 |
| | | US 2004010076 A1 | 15-01-2004 |
| US 6265517 B1 | 24-07-2001 | KEINE | |
| EP 0533465 A | 24-03-1993 | AT 146506 T | 15-01-1997 |
| | | AU 651731 B2 | 28-07-1994 |
| | | AU 2520992 A | 01-04-1993 |
| | | CA 2078603 A1 | 21-03-1993 |
| | | DE 69216024 D1 | 30-01-1997 |
| | | DE 69216024 T2 | 03-07-1997 |
| | | DK 533465 T3 | 06-01-1997 |
| | | EP 0533465 A2 | 24-03-1993 |
| | | ES 2097883 T3 | 16-04-1997 |
| | | GR 3022189 T3 | 31-03-1997 |
| | | HK 1004001 A1 | 13-11-1998 |
| | | JP 3368306 B2 | 20-01-2003 |
| | | JP 5222271 A | 31-08-1993 |
| | | KR 228227 B1 | 01-11-1999 |
| | | MX 9205283 A1 | 01-03-1993 |
| | | NO 923640 A | 22-03-1993 |
| | | US 5616633 A | 01-04-1997 |
| EP 1152019 A | 07-11-2001 | EP 1152019 A1 | 07-11-2001 |
| | | CA 2345874 A1 | 02-11-2001 |
| | | JP 2002012850 A | 15-01-2002 |
| | | US 2002007003 A1 | 17-01-2002 |
| JP 7102020 A | 18-04-1995 | KEINE | |
| JP 7102225 A | 18-04-1995 | KEINE | |
| WO 9633249 A | 24-10-1996 | AT 194162 T | 15-07-2000 |
| | | CA 2218298 A1 | 24-10-1996 |
| | | DE 19613204 A1 | 17-10-1996 |
| | | DE 59605512 D1 | 03-08-2000 |
| | | DK 821718 T3 | 16-10-2000 |
| | | WO 9633249 A1 | 24-10-1996 |
| | | EP 0821718 A1 | 04-02-1998 |
| | | ES 2148757 T3 | 16-10-2000 |
| | | GR 3033852 T3 | 31-10-2000 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT ÜBER DIE EUROPÄISCHE PATENTANMELDUNG NR.** EP 04 00 1406

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2004

| Im Recherchenbericht angeführtes Patentdokument | Datum der Veröffentlichung | Mitglied(er) der Patentfamilie | Datum der Veröffentlichung |
|---|---|---|---|
| WO 9633249 A | | PT 821718 T | 29-12-2000 |
| | | US 5973047 A | 26-10-1999 |

EPO FORM P0461

Für nähere Einzelheiten zu diesem Anhang : siehe Amtsblatt des Europäischen Patentamts, Nr.12/82